# EUROPEAN PATENT APPLICATION

(11) **EP 1 330 972 A1**
(43) Date of publication of application: **30.07.2003**
(21) Application number: 03075064.0
(22) Date of filing: 09.01.2003
(51) Int. Cl.: A47B 96/18, A47B 77/02, A47B 13/08

(54) **Method for manufacturing a wear-resistant deepened portion in a panel, as well as a table top, work top and/or draining board**

(30) Priority: 25.01.2002 NL 1019839
(71) Applicant: Isoform Leek B.V., 9351 VH Leek (NL)
(72) Inventor: Zuidema, Harm, 9351 SP Leek (NL)
(74) Representative: Prins, Adrianus Willem

(57) **Abstract**

The invention provides a method for manufacturing a wear-resistant deepened portion in a panel, wherein a recess (4) is provided in an outer side (3) of the panel (2), a wear-resistant covering (6) being applied on the outer side (3) of the panel (2) such that the covering (6) extends over the recess (4), the covering (6) being formed such that an outer side (7) of the covering (6) that faces away from the recess (4) provides the above deepened portion. The invention further provides a board made by such a method.

## Description

The invention relates to a method for manufacturing a wear-resistant deepened portion in a panel.

From practice a method is known in which first a strip is removed from the panel along the edge of the panel, such that a recess is formed along the panel edge. Subsequently, a strip is provided in this recess, which strip has such dimensions that it projects above an upper side of the panel and forms a raised edge. Subsequently, a part of the raised edge is milled off, so that this edge forms a flowing transition with the panel surface. This raised edge may serve, for instance, to prevent things moving along the upper side of the panel from falling off the panel. Such things may comprise, for instance, easily slidable and/or rollable things, liquids or the like.

Although the known water barrier thus obtained provides a good solution for inhibiting objects and liquid from gliding, rolling or flowing off the panel, yet some designers consider the known water barrier to be unaesthetic.

The present invention has for its object to provide an alternative water barrier for a panel, so that the panel obtains a very tautly designed appearance while retaining the functionality of the known water barrier.

To this end, the method according to the invention is characterized in that a recess is provided in an outer side of the panel, a wear-resistant covering being applied on the outer side of the panel such that the covering extends over the recess, the covering being formed such that an outer side of the covering that faces away from the recess provides the deepened portion.

In this manner, a wear-resistant deepened portion can be made in a panel in a relatively simple way. Moreover, the combination of these measures enables a deepened portion to be made in the panel, which deepened portion has a great possibility of variation in dimensions and/or cross-section. In particular, the deepened portion may be of such design that it has a relatively small width and a relatively great depth, so that the deepened portion can collect and/or stop a relatively large amount of things. Furthermore, in this manner a wear-resistant deepened portion can be made in the panel, which deepened portion extends along the outer side of the panel over an optional distance. To this end, the recess can be provided in the panel in a correspondingly optional length.

An advantage of the covering is that it imparts wear resistance to the deepened portion. Furthermore, the covering may simply be of such design that the deepened portion thereby provided is highly resistant to mechanical and/or chemical influences. To this end, the covering may be made of, for instance, plastic and particularly comprise a synthetic laminate of thermoplastic material. Moreover, synthetic material can be brought into a desired form in an inexpensive and relatively simple manner, at least into the form in which the covering provides the deepened portion.

The wear-resistant covering is preferably formed such that the deepened portion provided by the outer side of the covering is substantially flowing. Consequently, the deepened portion can be very wear-resistant, substantially without sharp longitudinal edges.

Moreover, the wear-resistant covering may be formed such that the covering adjoins the inner wall of the recess substantially without interspace. In that case, the covering relatively closely fits at least the recess of the panel, such that there the inner wall of the recess can impart firmness and support to the covering.

According to a very advantageous elaboration of the invention, the covering is formed such that the covering bounds an interspace with the inner wall of the recess.

Consequently, the covering can be made in a relatively rapid and easy manner, since the precise dimension, at least cross-section, of the recess need not be taken into account. Moreover, in this manner the covering can be placed over the recess in a relatively rapid manner, since there is play, in the form of the above interspace, between the covering and the inner wall of the recess. It is then very advantageous if the interspace is at least partly filled with a filling agent. The filling agent may support the part of the covering that extends above the inner wall of the recess. Thus, the filling agent can impart firmness to this part of the covering, which reduces the risk that the covering may be deformed and/or damaged by, for instance, mechanical forces acting thereon from an environment. The filling agent may comprise, for instance, an adhesive substance and/or a foaming material, in particular PUR.

According to a further elaboration, the panel is provided with at least one passage extending to the interspace, at least one part of the filling agent being brought into the interspace via the at least one passage.

Via the at least one passage the filling agent can be easily brought into the above interspace, which, for instance, is advantageous when the interspace, or a part thereof, is hardly accessible from an environment. Consequently, the whole interspace can be evenly filled with the filling agent.

According to an advantageous elaboration, the covering is deformed to provide the deepened portion, the deformation taking place after at least a part of the covering has been applied on the panel.

In this manner, the covering can be simply used to support the covering during the deformation. Moreover, the covering can thus be applied on the panel in a relatively rapid manner. To this end, the covering may contain, for instance, such material that the covering is formable by heating. Such a covering may be made of, for instance, suitable synthetic material. Here, it is further advantageous if the covering is fixed on the outer side of the panel such that during the deformation at least a part of the covering located near the recess can freely move relative to the panel to enable compensation of possible deformation stresses occurring in the covering. In this manner, mechanical stresses arising between the covering and the panel during the deformation can be avoided, which stresses are disadvantageous to the firmness of the connection between the covering and the panel.

The invention further provides a board, in particular a table top, work top, draining board, laboratory and/or counter top, a bathroom and/or wash basin element, which is characterized by the measures of claim 18.

Since the board has been obtained with a method according to any of claims 1-17, the deepened portion may be relatively narrow, while the deepened portion is wear-resistant, because the deepened portion is provided by the outer side of the wear-resistant covering. This board may be provided with a relatively large working surface. The wear-resistant covering can protect the outer side of the panel, at least the inner wall of the at least one recess. Preferably, the wear-resistant covering substantially covers the whole outer side of the panel to cover and protect that side of the panel. The covering may guide, collect and/or stop with the deepened portion a large amount of things moving along the outer side of the draining board, so that these things, for instance, do not fall off the draining board, at least when the outer side is an upper side of the board.

Further elaborations of the invention are described in the subclaims.

The invention will be described in more detail with reference to some exemplary embodiments and the drawing. In this drawing:
Fig. 1 is a perspective view of a first exemplary embodiment of the invention;
Fig. 2 is a side view of the perspective view shown in Fig. 1;
Fig. 3 is a side view as in Fig. 2, in which the recess has a curved cross-section;
Fig. 4 is a side view as in Fig. 2, in which the recess has a triangular cross-section;
Fig. 5 is a perspective view of a second exemplary embodiment of the invention; and
Fig. 6 is a perspective view of a third exemplary embodiment of the invention.

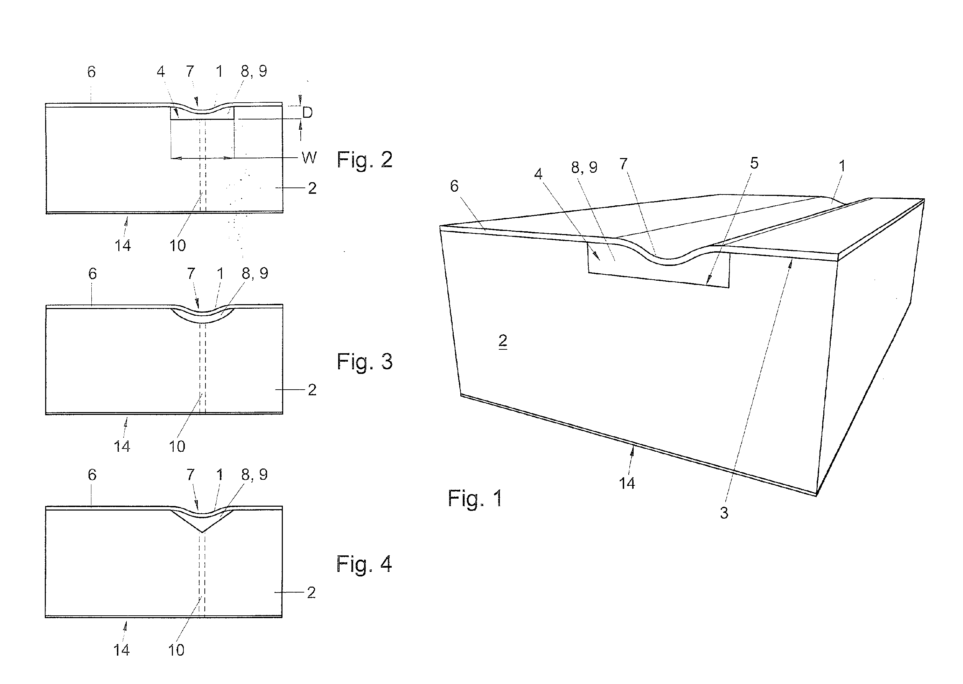

Figs. 1 and 2 show a panel 2 made by a method according to the invention. Provided in an outer side 3 of the panel 2 is a trough-shaped recess 4. The cross-section of this recess 4 is rectangular in the exemplary embodiment shown in Figs. 1 and 2. Many other forms are possible, for instance a recess 4 with a curved or a triangular cross-section, as shown in respectively Figs. 3 and 4.

A wear-resistant covering 6 is applied on the outer side 3 of the panel 2 such that the covering 6 extends over an inner wall 5 of the at least one recess 4. Moreover, the covering 6 is formed such that an outer side 7 of the covering 6 that faces away from the inner wall 5 of the recess 4 provides a deepened portion 1. The covering 6 is formed such that the covering 6 bounds an interspace 8 with the inner wall 5 of the recess 4. The interspace 8 is filled with a filling agent 9, such as an adhesive substance and/or a foaming agent. The filling agent 9 supports the part of the covering 6 that extends above the inner wall 5 of the recess 4. The filling agent 9 may be applied in the interspace 8 in different manners, for instance before, during or after application of the covering 6 on the panel 2. To this end, the panel 2 may be provided with, for instance, at least one passage 10 which extends from an outer side 14 of the panel 2 located opposite the outer side 3 to the interspace 8. Such a passage 10 is indicated in Figs. 2-4 with dash lines. The filling agent 9 may be simply injected via this passage 10 into the recess 4, at least interspace 8.

The width W of the recess 4 measured in the plane of the outer side 3 of the panel 2, as shown in Fig. 2, may be smaller than 5 cm, in particular smaller than 3 cm. With these dimensions of the recess 4 the amount of surface of the side 3 of the panel 2 that the recess 4 occupies remains relatively small, so that a large part of that outer side 3 can be used for, for instance, working on.

The depth D of the recess 4, as shown in Fig. 2, is preferably within the range of 1 mm - 30 mm, more in particular of 5 mm - 30 mm. This recess 4 has sufficient depth to apply over it a covering 6 formed such that the covering 6 can provide a sufficiently deep deepened portion 1. Such a relatively deep deepened portion is advantageous, because with it a relatively large amount of things, for instance liquid, moving over the outer side 3 of the panel can be stopped and/or collected.

The covering 6 may have a thickness within the range of 0.5 mm - 20 mm, more in particular 1 mm - 3 mm. A covering 6 having such a thickness has a relatively low weight and therefore contributes relatively little to the weight of the panel 2. Moreover, as a rule such a relatively thin covering 6 may simply be formed such that the covering can sink relatively deeply into the recess 4 to provide a relatively deep deepened portion 1. On a side facing away from the panel 2 the covering 6 may further be provided with a decoration which, for instance for a laminate covering, can be made in a relatively simple and known manner. The decoration may contain, for instance, a stone and/or a wood marking.

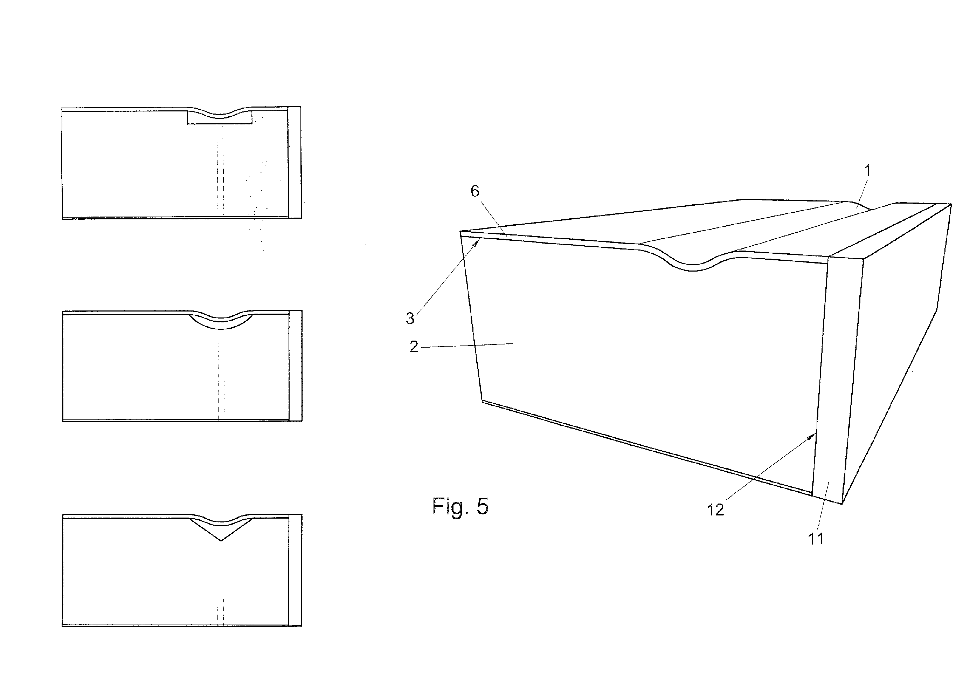

Figs. 5 show a first alternative exemplary embodiment of a panel 2 made by a method according to the present invention. In this case, the panel 2 is provided with a plate-shaped element 11 attached to a side of the panel 1. The element 11 may serve, for instance, to protect and/or strengthen that side of the panel 2. The covering 6 may extend to the element 11 over the outer side 3 of the base element 2, as shown in Fig. 5. It is also possible that the covering 6 also extends over at least a part of the element 11.

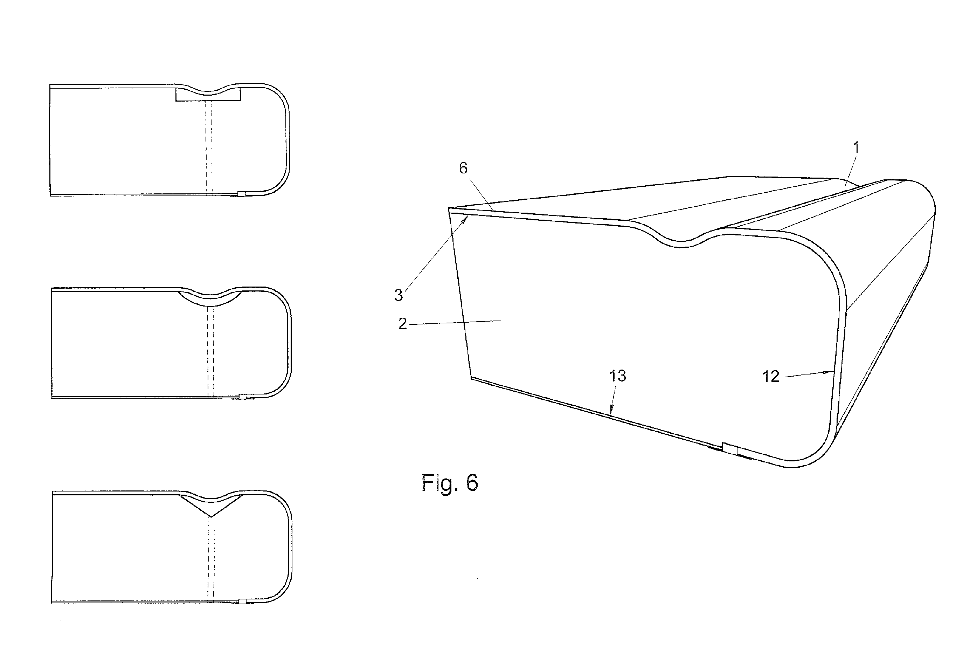

Fig. 6 shows a second alternative embodiment of a panel 2, the covering 6 extending from the outer side 3 of the panel 2, in which side 3 the recess 4 is provided, to the opposite side 13 via an interposed side 12. Thus, the covering may simply cover and protect this side 12 of the panel 2.

It is self-evident that the invention is not limited to the described exemplary embodiments. Various modifications are possible within the scope of the invention as outlined in the following claims, which variants will be clear to those skilled in the art.

Thus, the panel 2 may be designed in different forms and made of different materials. The recess 4 in the panel 2 may be provided in the panel 2, for instance, by milling, planing, grinding, drilling or in another manner. The recess 4 may then be, for instance, trough-shaped or in another form, such as circular, angular or a combination of these or other forms.

Furthermore, the panel 2 may be provided with different wear-resistant deepened portions made by the method according to the present invention.

Furthermore, the wear-resistant covering may be made of different materials, such as synthetic material, metal, an alloy or the like.

Besides, the deepened portion 1 may be intended for several purposes, such as collecting and/or stopping specific things, holding specific things, such as pens, if the panel is a desk panel. The things to be collected, held and/or stopped by the deepened portion 1 may comprise foods, tools, liquid and the like.

## Claims

1. A method for manufacturing a wear-resistant deepened portion in a panel, wherein a recess (4) is provided in an outer side (3) of the panel (2), a wear-resistant covering (6) being applied on said outer side (3) of the panel (2) such that the covering (6) extends over the recess (4), the covering (6) being formed such that an outer side (7) of the covering (6) that faces away from the recess (4) provides said deepened portion (1).

2. A method according to claim 1, wherein the covering (5) is formed such that the covering (6) adjoins an inner wall (5) of the recess (4) substantially without interspace.

3. A method according to claim 1, wherein the covering (6) is formed such that the covering (6) bounds an interspace (8) with an inner wall (5) of the recess (4).

4. A method according to claim 3, wherein said interspace (8) is at least partly filled with a filling agent (9).

5. A method according to claim 4, wherein the filling agent (9) comprises an adhesive substance and/or a foaming material, in particular PUR.

6. A method according to claim 4 or 5, **characterized in that** the panel (2) is provided with at least one passage (10) extending to the interspace (8), at least one part of the filling agent (9) being brought via the at least one passage (10) into the interspace (8).

7. A method according to any of the preceding claims, wherein the covering (6) is made of synthetic material and particularly comprises a synthetic laminate of thermoplastic material.

8. A method according to any of the preceding claims, wherein the covering (6) is formed to provide the deepened portion (1), the deformation taking place after at least a part of the covering (6) has been applied on the panel (2).

9. A method according to claim 8, wherein the covering (6) contains such material that the covering is formable by heating to deform it.

10. A method according to claim 8 or 9, wherein the covering (6) is fixed on said outer side (3) of the panel (2) such that during the deformation at least a part of the covering (6) located near the recess can freely move relative to the panel (2) to enable compensation of deformation stress then occurring in the covering (6).

11. A method according to any of the preceding claims, wherein the recess (4) is milled in the panel.

12. A method according to any of the preceding claims, wherein the width (W) of the recess (4) measured in the plane of said outer side (3) of the panel (2) is smaller than 5 cm, in particular smaller than 3 cm.

13. A method according to any of the preceding claims, wherein the depth (D) of the at least one recess (4) is within the range of 1 mm - 30 mm, more in particular 5 mm - 30 mm.

14. A method according to any of the preceding claims, wherein the covering (6) has a thickness within the range of 0.5 mm - 20 mm, more in particular 0.5 mm - 3 mm.

15. A method according to any of the preceding claims, wherein the at least one recess (4) extends along and near an edge of the panel (2).

16. A method according to any of the preceding claims, wherein the covering (6) is formed such that the deepened portion (1) provided by said outer side (7) of the covering (6) is substantially flowing.

17. A method according to any of the preceding claims, wherein the wear-resistant covering (6) substantially extends over the whole outer side (3) of the panel (2).

18. A board, in particular a table top, work top, draining board, laboratory and/or counter top, a bathroom and/or wash basin element, obtained with a method according to any of the preceding claims.
